# EUROPÄISCHE PATENTSCHRIFT

(11) **EP 1 479 939 B1**
(45) Veröffentlichungstag und Bekanntmachung des Hinweises auf die Patenterteilung: **28.03.2007**
(21) Anmeldenummer: 04008362.8
(22) Anmeldetag: 06.04.2004
(51) Int. Cl.: F16F 15/32

(54) **Fahrzeugrad-Wuchtgewichtsstrang**
Balance weight strip for the balancing of vehicle wheels
Bande de poids d'équilibrage pour roue de véhicule

(30) Priorität: 21.05.2003 DE 20307952 U
(43) Veröffentlichungstag der Anmeldung: 24.11.2004
(73) Patentinhaber: Jansen & Buscher GmbH & Co. KG, 47809 Krefeld (DE)
(72) Erfinder: Bettchen, Uwe, 42579 Heiligenhaus (DE)
(74) Vertreter: Volpert, Marcus

(56) Entgegenhaltungen:
- EP-A- 1 067 310
- EP-A- 1 248 014
- WO-A-92/00471
- WO-A-99/31406
- DE-A- 10 343 042
- DE-U- 20 119 769
- US-A- 4 890 622

## Beschreibung

Die Erfindung betrifft einen Wuchtgewichtsstrang zum Auswuchten von Fahrzeugrädern und -felgen, gemäß dem Oberbegriff des Anspruchs 1.

Derartige Wuchtgewichtsstränge sind beispielsweise aus dem Gebrauchsmuster 201 19 769 und der japanischen Patentveröffentlichung 2000 186 748 bekannt.

Bisher wurden die Wuchtgewichte in der Regel aus Blei hergestellt, das jedoch zukünftig aufgrund gesetzlicher Bestimmungen nicht mehr verwendet werden darf. Es ergibt sich deshalb die Notwendigkeit, dieses Metall durch ein geeignetes anderes Metall zu ersetzen, das aufgrund seiner chemischen Zusammensetzung sowie seiner mechanischen Eigenschaften sich gut kaltumformen und damit in die gewünschte Metallplatten- bzw. -plättchenform bringen läßt.

Nun ist bereits in dem genannten Stand der Technik vorgeschlagen worden, derartige Wuchtgewichte, die auf einem gemeinsamen Trägerband aneinandergereiht werden, aus einem anderen Metall als Blei, beispielsweise aus Stahl oder Kupfer, herzustellen, jedoch hat dieser allgemeine Hinweis bisher nicht zu einem brauchbaren und auf diesem Spezialgebiet der Auswuchtung von Fahrzeugrädern besonders gut einsetzbaren Ersatzprodukt für die bisher verwendeten Bleigewichte geführt, wobei die Brauchbarkeit nicht nur die besondere Kaltverformungsfähigkeit und damit Herstellbarkeit betrifft, sondern auch die Korrosionsbeständigkeit im Fahrzeugeinsatz und damit die Betriebssicherheit der mit solchermaßen ausgewuchteten Fahrzeugrädem bestückten Fahrzeuge.

Dabei war insbesondere zu berücksichtigen, daß die Fahrzeuge nicht nur witterungs- sondern auch umweltbedingten starken Beanspruchungen ausgesetzt sind, so beispielsweise Streusalzeinwirkungen im Winter bei Eis und Schnee, die gegenüber den meisten Metallen ein aggressives Verhalten zeigen, sondern auch zunehmend höheren Zentrifugalkräften aufgrund höherer Radgeschwindigkeiten. Da die Wuchtgewichte in Strangform auf einem Trägerband in der Regel mittels eines Klebstoffs aufgebracht sind, das in das Fahrzeugrad bzw. die -felge an der Auswuchtstelle eingeklebt wird, müßten die Korrosionseigenschaften der einzelnen Wuchtgewichte auch im Hinblick auf ihre Verträglichkeit mit dem Trägerband und damit der Dauerhaftigkeit der Haftung auf dem Trägerband berücksichtigt und das Trägerband so gewählt werden, daß seine Eigenschaften, insbesondere seine Haftfähigkeit sowie Zugfestigkeit in Längs- und Querrichtung, sich im Hinblick auf ein zu findendes "Ersatzmetall" besonders gut eignen.

Es versteht sich, daß unter diesen Umständen der bisherige bloße Hinweis auf die Verwendung von Metallen für Wuchtgewichte keine brauchbare Lehre zum technischen Handeln beinhaltet, sondern es einer gezielten Untersuchung und Auswahl für diesen speziellen Verwendungszweck bedurfte, um besonders geeignete Metalle bzw. Metalllegierungen ausfindig zu machen, und zwar unter spezieller Berücksichtigung eines Montageklebebandes als Trägerband für die Wuchtgewichte.

Hier setzt die Erfindung ein, die vorschlägt, daß die Metallplatten oder -plättchen aus VA-Stahl der Werkstoffnummern 1.4301, 1.4541 und 1.4571 mit in Gew.-% 0 bis 0,08 C und 16,5 bis 19,5 Cr und 8 bis 13,5 Ni sowie wahlweise 0 bis 0,7 Ti und/oder 2 bis 2,5 Mo bestehen und durch Stanzen im Umschneideverfahren aus Warmband hergestellt sind, und daß das Trägerband ein doppelseitiges Montageklebeband mit geschlossenzelligem Polyethylencopolymer-Schaumstoffträger und Folienverstärkung ist.

Vorteilhafte Ausgestaltungen der Erfindung sind in den Unteransprüchen gekennzeichnet.

Demgemäß hat sich für die Metallplatten oder -plättchen eine Legierungszusammensetzung besonders bewährt, die in Gew.-% einen C-Anteil von 0,0 Cr-Anteil von 17,0 und Ni-Anteil von 8,0 ohne Ti- und Mo-Anteile aufweist.

Gemäß einer anderen Legierungszusammensetzung für den Wuchtsgewichtsstrang beträgt in Gew.-% der C-Anteil 0,07, Cr-Anteil 19,5, Ni-Anteil 10,5, Ti-Anteil 0,0 und Mo-Anteil ebenfalls 0,0, was wie bereits im letztgenannten Fall der Werkstoffnummer 1.4301 entspricht. Werden die Metallplatten bzw. -plättchen aus einer Legierung der Werkstoffnummer 1.4541 gefertigt, so hat es sich bewährt, bei dem einen Fall in Gew.-%, den C-Anteil auf 9,0, den Cr-Anteil auf 17,0, den Ni-Anteil auf 9,0, den Ti-Anteil auf 5 x C, also dem fünffachen C-Anteil und damit im vorliegenden Fall ebenfalls 0,0, und den Mo-Anteil auf gleichfalls 0,0 festzusetzen.

Im anderen Fall wird in Gew.-% als C-Anteil 0,08, Cr-Anteil 19,0, Ni-Anteil 12,0, Ti-Anteil 0,7 und Mo-Anteil 0,0 gewählt.

Schließlich ist es ebenfalls besonders vorteilhaft, eine Legierung der Werkstoffnummer 1.4571 für die Metallplatten bzw. -plättchen zu wählen, was bedeutet, daß einerseits bei einem C-Anteil von 0,0 der Cr-Anteil 16,5, der Ni-Anteil 10,5, der Ti-Anteil 5 x C und der Mo-Anteil 2,0 betragen, während in einem anderen Fall der C-Anteil 0,08, der Cr-Anteil 18,5, der Ni-Anteil 13,5, der Ti-Anteil 0,7 und der Mo-Anteil 2,5 Gew.-% betragen sollten.

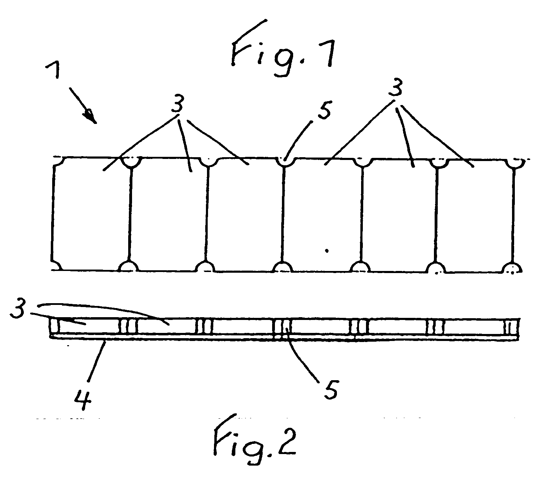

In der Zeichnung ist eine Ausführungsform eines Gliederbandes 1 in Draufsicht (Fig. 1) und Seitenansicht (Fig. 2) des Wuchtgewichtsstrangs beispielshalber dargestellt. Die einzelnen Metallplättchen 3 des Gliederbandes bestehen aus einer der oben im einzelnen angeführten Legierungen und sind auf einem Trägerband 4, das doppelseitig mit Klebstoff beschichtet ist, in Reihe aufgeklebt.

Die Ecken 5 der rechteckigen Metallplättchen 3 sind im Umschneidverfahren konkav abgerundet worden, wobei der Rundungsradius 1,5 mm beträgt.

## Patentansprüche

1. Wuchtgewichtsstrang zum Auswuchten von Fahrzeugrädern und Felgen,
bestehend aus mehreren metallischen Auswuchtgewichten, die ein an die Radoberfläche angepasstes Gliederband bilden,
bestehend aus auf einem selbstklebenden, doppelseitig mit Klebestoff beschichtetem Trägerband (4) aufeinander folgend angebrachten, separaten Metallplatten oder -plättchen (3), deren Breite (B) und Länge (L) wesentlich größer sind als ihre Dicke (D),
**dadurch gekennzeichnet, dass**
die Metallplatten oder -plättchen (3) aus VA-Stahl der Werkstoffnummern 1.4301, 1.4541 und 1.4571 mit in Gew.-% 0 bis 0,08 C und 16,5 bis 19,5 Cr und 8 bis 13,5 Ni sowie wahlweise 0 bis 0,7 Ti und/oder 2 bis 2,5 Mo bestehen und durch Stanzen im Umschneideverfahren aus Warmband hergestellt sind,
und dass das Trägerband (4) ein doppelseitiges Montageklebeband mit geschlossenzelligem Polyethylencopolymer-Schaumstoffträger und Folienverstärkung ist.

2. Wuchtgewichtsstrang nach Anspruch 1, **dadurch gekennzeichnet, dass** in Gew.-% der C-Anteil 0,0, der Cr-Anteil 17,0, der Ni-Anteil 8,0, der Ti-Anteil 0,0 und der Mo-Anteil 0,0 betragen.

3. Wuchtgewichtsstrang nach Anspruch 1, **dadurch gekennzeichnet, dass** in Gew.-% der C-Anteil 0,07, der Cr-Anteil 19,5, der Ni-Anteil 10,5, der Ti-Anteil 0,0 und der Mo-Anteil 0,0 betragen.

4. Wuchtgewichtsstrang nach Anspruch 1, **dadurch gekennzeichnet, dass** in Gew.-% der C-Anteil 0,0, der Cr-Anteil 17,0, der Ni-Anteil 9,0, der Ti-Anteil 5 x C und der Mo-Anteil 0,0 betragen.

5. Wuchtgewichtsstrang nach Anspruch 1, **dadurch gekennzeichnet, dass** in Gew.-% der C-Anteil 0,08, der Cr-Anteil 19,0, der Ni-Anteil 12,0, der Ti-Anteil 0,7 und der Mo-Anteil 0,0 betragen.

6. Wuchtgewichtsstrang nach Anspruch 1, **dadurch gekennzeichnet, dass** in Gew.-% der C-Anteil 0,0, der Cr-Anteil 16,5, der Ni-Anteil 10,5, der Ti-Anteil 5 x C und der Mo-Anteil 2,0 betragen.

7. Wuchtgewichtsstrang nach Anspruch 1, **dadurch gekennzeichnet, dass** in Gew.-% der C-Anteil 0,08, der Cr-Anteil 18,5, der Ni-Anteil 13,5, der Ti-Anteil 0,7 und der Mo-Anteil 2,5 betragen.

8. Wuchtgewichtsstrang nach einem der vorhergehenden Ansprüche, **dadurch gekennzeichnet, dass** die Metallplatten oder -plättchen (3) konkav abgerundete Ecken (5) aufweisen.

9. Wuchtgewichtsstrang nach Anspruch 8, **dadurch gekennzeichnet, dass** der Rundungsradius der Ecken (5) 1,5 mm beträgt.

## Claims

1. Balancing weight track for balancing of motor vehicles wheels and motor vehicle rims, comprising several metallic balancing weights forming an articulate ribbon adapted to the surface of the wheel, which ribbon consisting of separate metallic plates or leafs (3) the width (B) and the length (L) of which are essentially greater than their thickness and being continuously fixed adjacent to one another on a self adhesive supporting tape (4) covered on both opposite surfaces with cement, **characterized in that** the metal plates or metal leafs (3) are comprised of VA-steel of material numbers 1.4301, 1.4541 and 1.4571 consisting in weight-% of 0 to 0.08 C and 16.5 to 19.5 Cr and 8 to 13.5 Ni as well alternatively 0 to 0.7 Ti and/or 2 to 2.5 Mo and are manufactured from warm band by punching in an transformation cutting process and that the supporting tape (4) is a bilateral mounting adhesive tape provided with a closed cellular polyethylene copolymer foam support and foil reinforcement.

2. Balancing weight track according to claim 1, **characterized in that** by weight-% the C-content is 0.0, the Cr-content 17.0, the Ni-content 8.0, the Ti-content 0.0, and the Mo-content is 0.0.

3. Balancing weight track according to claim 1, **characterized in that** by weight-% the C-content is 0.07, the Cr-content 19.5, the Ni-content 10.5, the Ti-content 0.0, and the Mo-content is 0.0.

4. Balancing weight track according to claim 1, **characterized in that** by weight-% the C-content is 0.0, the Cr-content 17.0, the Ni-content 9.0, the Ti-content 5 times the C-content, and the Mo-content is 0.0.

5. Balancing weight track according to claim 1, **characterized in that** by weight-% the C-content is 0.08, the Cr-content 19.0, the Ni-content 12.0, the Ti-content 0.7, and the Mo-content is 0.0.

6. Balancing weight track according to claim 1, **characterized in that** by weight-% the C-content is 0.0, the Cr-content 16.5, the Ni-content 10.5, the Ti-content 5 times the C-content, and the Mo-content is 2.0.

7. Balancing weight track according to claim 1, **characterized in that** by weight-% the C-content is 0.08, the Cr-content 18.5, the Ni-content 13.5, the Ti-content 0.7, and the Mo-content is 2.0.

8. Balancing weight track according to one of the preceding claims, **characterized in that** the metal plates or metal leafs (3) are provided with concavely rounded corners (5).

9. Balancing weight track according to claim 8, **characterized in that** the rounding radius of the corners (5) is 1.5 mm.

## Revendications

1. Bande à masselottes d'équilibrage pour équilibrer des roues de véhicule et des jantes,
constituée par plusieurs masselottes d'équilibrage métalliques qui forment une bande à maillons adaptée à la surface de la roue,
constituée par des plaques ou des plaquettes métalliques séparées (3) agencées en succession sur une bande porteuse (4) autocollante revêtue de colle sur les deux côtés, plaques dont la largeur (B) et dont la longueur (L) sont sensiblement plus importantes que leur épaisseur (D),
**caractérisée en ce que**
les plaques ou plaquettes métalliques (3) sont constituées en acier VA portant les numéros de matériau 1.4301, 1.4541 et 1.4571 avec, exprimé en % en poids, 0 à 0,08 C et 16,5 à 19,5 Cr et 8 à 13,5 Ni ainsi qu'au choix 0 à 0,7 Ti et/ou 2 à 2,5 Mo, et elles sont fabriquées par poinçonnage dans un procédé de découpage à partir de bande à chaud,
et **en ce que** la bande porteuse (4) est une bande de montage collante double face présentant un support en mousse à cellules fermées en copolymère de polyéthylène et un renforcement en feuille.

2. Bande à masselottes d'équilibrage selon la revendication 1, **caractérisée en ce que**, exprimé en % en poids, la part en C est 0,0, la part en Cr est 17,0, la part en Ni est 8,0, la part en Ti est 0,0 et la part en Mo est 0,0.

3. Bande à masselottes d'équilibrage selon la revendication 1, **caractérisée en ce que**, exprimé en % en poids, la part en C est 0,07, la part en Cr est 19,5, la part en Ni est 10,5, la part en Ti est 0,0 et la part en Mo est 0,0.

4. Bande à masselottes d'équilibrage selon la revendication 1, **caractérisée en ce que**, exprimé en % en poids, la part en C est 0,0, la part en Cr est 17,0, la part en Ni est 9,0, la part en Ti est 5 x C et la part en Mo est 0,0.

5. Bande à masselottes d'équilibrage selon la revendication 1, **caractérisée en ce que**, exprimé en % en poids, la part en C est 0,08, la part en Cr est 19,0, la part en Ni est 12,0, la part en Ti est 0,7 et la part en Mo est 0,0.

6. Bande à masselottes d'équilibrage selon la revendication 1, **caractérisée en ce que**, exprimé en % en poids, la part en C est 0,0, la part en Cr est 16,5, la part en Ni est 10,5, la part en Ti est 5 x C et la part en Mo est 2,0.

7. Bande à masselottes d'équilibrage selon la revendication 1, **caractérisée en ce que**, exprimé en % en poids, la part en C est 0,08, la part en Cr est 18,5, la part en Ni est 13,5, la part en Ti est 0,7 et la part en Mo est 2,5.

8. Bande à masselottes d'équilibrage selon l'une des revendications précédentes, **caractérisée en ce que** les plaques ou plaquettes métalliques (3) présentent des coins (5) arrondis concaves.

9. Bande à masselottes d'équilibrage selon la revendication 8, **caractérisée en ce que** le rayon de l'arrondi des coins (5) est de 1,5 mm.
